(19) Europäisches Patentamt / European Patent Office / Office européen des brevets

(11) **EP 4 601 253 A1**

(12) **EUROPEAN PATENT APPLICATION**
published in accordance with Art. 153(4) EPC

(43) Date of publication:
**13.08.2025 Bulletin 2025/33**

(21) Application number: **23881644.1**

(22) Date of filing: **11.10.2023**

(51) International Patent Classification (IPC):
**H04L 27/26** (2006.01)

(52) Cooperative Patent Classification (CPC):
**H04L 27/14; H04L 27/26**

(86) International application number:
**PCT/CN2023/124100**

(87) International publication number:
**WO 2024/088065 (02.05.2024 Gazette 2024/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.10.2022 CN 202211338391**

(71) Applicant: **Huawei Technologies Co., Ltd.
Shenzhen, Guangdong 518129 (CN)**

(72) Inventors:
• **HAN, Chao
Shenzhen, Guangdong 518129 (CN)**
• **LUO, Zhihu
Shenzhen, Guangdong 518129 (CN)**
• **JIN, Zhe
Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(54) **COMMUNICATION METHOD, AND APPARATUS**

(57) A communication method and apparatus are provided, to improve FSK demodulation performance of a low-power device. After determining at least two OFDM subcarriers, a first device sends an FSK signal to a second device on the at least two OFDM subcarriers, and the second device demodulates the FSK signal. In this way, FSK transmission of a low-power receiver can be compatible with OFDM, so that the FSK demodulation performance can be improved.

```
     ┌─────────────┐              ┌───────────────┐
     │ First device│              │ Second device │
     └──────┬──────┘              └───────┬───────┘
     ┌──────┴──────────┐
     │ 301: Determine at least │
     │ two OFDM subcarriers    │
     └──────┬──────────┘

       302: Send an FSK signal on the
       at least two OFDM subcarriers
            ──────────────────────────────►
                                  ┌───────┴────────┐
                                  │ 303: Demodulate the │
                                  │ FSK signal          │
                                  └────────────────┘
```

FIG. 3

**Description**

CROSS-REFERENCE TO RELATED APPLICATIONS

This application claims priority to Chinese Patent Application No. 202211338391.9, filed with the China National Intellectual Property Administration on October 28, 2022, and entitled "COMMUNICATION METHOD AND APPARATUS", which is incorporated herein by reference in its entirety.

TECHNICAL FIELD

This application relates to the field of communication technologies, and in particular, to a communication method and apparatus.

BACKGROUND

With popularization of 5th generation (5th generation, 5G) new radio (new radio, NR) systems, internet of things (internet of things, IoT) communication requirements gradually rise. The 3rd generation partnership project (3rd generation partnership project, 3GPP) standardizes a series of internet of things technologies in machine type communication (machine type communication, MTC), narrow-band IoT (narrow-band IoT, NB-IoT), reduced capability (reduced capability, RedCap) terminal devices, and the like. Increasing internet of things devices are deployed in people's life. With further growth of the internet of things communication requirements, reducing power consumption of a device becomes an important means of prolonging a battery life, where a wireless communication transceiver is one of components that consume much power in the device. To further meet the internet of things requirements, an internet of things device featuring a smaller battery or even a battery-free design, extremely low power consumption, and extremely low costs is required, or a method for reducing power consumption of a radio transceiver needs to be designed, to overcome the limitation of costs, a size, power consumption, and the like on the internet of things device. For example, for a low-power internet of things device, a method for reducing power consumption of the device is receiving in a non-coherent demodulation method, and a common non-coherent demodulation method includes frequency shift keying (frequency shift keying, FSK) modulation, and the like. However, currently, when the FSK modulation method is applied to the low-power device, demodulation performance is poor.

SUMMARY

This application provides a communication method and apparatus, to improve FSK demodulation performance of a low-power device.

According to a first aspect, this application provides a communication method. The method may be applied to a first device, a functional module in the first device, a processor or a chip in the first device, or the like. The method may include: After determining at least two orthogonal frequency division multiplexing (orthogonal frequency division multiplexing, OFDM) subcarriers, a first device sends a frequency shift keying (frequency shift keying, FSK) signal to a second device on the at least two OFDM subcarriers.

According to the method, FSK transmission of a low-power receiver can be compatible with OFDM, so that FSK demodulation performance can be improved.

In a possible design, no information is carried in a frequency domain range between every two adjacent OFDM subcarriers in the at least two OFDM subcarriers. In this way, interference information to the FSK signal can be reduced.

In a possible design, a frequency of the FSK signal may be the same as a frequency of an OFDM subcarrier corresponding to the FSK signal. In this way, FSK transmission can be compatible with OFDM.

In a possible design, the FSK signal may occupy one OFDM subcarrier in the at least two OFDM subcarriers in one time unit. In this way, the first device can successfully send the FSK signal.

In a possible design, the at least two OFDM subcarriers are two OFDM subcarriers, and frequencies of the two OFDM subcarriers may meet the following formula:

$$\frac{\Delta f \cdot (1 + 4n)}{f_0} = 1$$

where $\Delta f$ is a frequency spacing between a center frequency of the two OFDM subcarriers and each of the frequencies of the two OFDM subcarriers, $f_0$ is an intermediate frequency, and n is a delay coefficient.

According to the method, the FSK demodulation performance can be improved.

In a possible design, the first device determines the at least two OFDM subcarriers, and the method may include: The first device may receive first information sent by the second device, where the first information may be used to determine the at least two OFDM subcarriers; and the first device may determine the at least two OFDM subcarriers based on the first information; or the first device may determine the at least two OFDM subcarriers that are predefined. In this way, the first device can flexibly and accurately determine the at least two OFDM subcarriers, to implement FSK signal transmission.

In a possible design, the first information may include at least one of the following: an intermediate frequency of the second device, information about whether the second device supports an orthogonal self-delay receiver structure, information about whether the second device supports a fractional delay filter, a delay coefficient supported by the second device, information about whether the second device supports FSK, an FSK order supported by the second device, a quantity of subcarriers in at least two OFDM subcarriers supported by the second device, and a band-pass filter parameter of the second device. In this way, the first device may accurately determine the at least two OFDM subcarriers based on the first information.

In a possible design, the FSK signal may be used by the second device to obtain time and/or frequency synchronization, and the at least two OFDM subcarriers may be a first subcarrier set; or the FSK signal may be used by the second device to obtain data, and the at least two OFDM subcarriers may be a second subcarrier set, where the first subcarrier set is different from the second subcarrier set. In this way, appropriate OFDM subcarriers can be selected based on different requirements.

In a possible design, the FSK signal may be used by the second device to obtain time and/or frequency synchronization, and a delay coefficient used by the second device may be a first delay coefficient; or the FSK signal may be used by the second device to obtain data, and a delay coefficient used by the second device may be a second delay coefficient, where the first delay coefficient is different from the second delay coefficient. In this way, appropriate delay coefficients can be selected based on different requirements.

According to a second aspect, this application provides a communication method. The method may be applied to a second device, a functional module in the second device, a processor or a chip in the second device, or the like. The method may include: After receiving, on at least two OFDM subcarriers, an FSK signal sent by a first device, a second device demodulates the FSK signal.

According to the method, FSK transmission of a low-power receiver can be compatible with OFDM, so that FSK demodulation performance can be improved.

In a possible design, no information is carried in a frequency domain range between every two adjacent OFDM subcarriers in the at least two OFDM subcarriers. In this way, interference information to the FSK signal can be reduced.

In a possible design, a frequency of the FSK signal is the same as a frequency of an OFDM subcarrier corresponding to the FSK signal. In this way, FSK transmission can be compatible with OFDM.

In a possible design, the FSK signal may occupy one OFDM subcarrier in the at least two OFDM subcarriers in one time unit. In this way, the second device can successfully receive the FSK signal.

In a possible design, the at least two OFDM subcarriers are two OFDM subcarriers, and frequencies of the two OFDM subcarriers meet the following formula:

$$\frac{\Delta f \cdot (1 + 4n)}{f_0} = 1$$

where $\Delta f$ is a frequency spacing between a center frequency of the two OFDM subcarriers and each of the frequencies of the two OFDM subcarriers, $f_0$ is an intermediate frequency, and n is a delay coefficient.

According to the method, the FSK demodulation performance can be improved.

In a possible design, the second device sends first information to the first device, where the first information is used to determine the at least two OFDM subcarriers; or the second device determines the at least two OFDM subcarriers that are predefined. In this way, the first device can flexibly and accurately determine the at least two OFDM subcarriers, to implement FSK signal transmission.

In a possible design, the first information may include at least one of the following: an intermediate frequency of the second device, information about whether the second device supports an orthogonal self-delay receiver structure, information about whether the second device supports a fractional delay filter, a delay coefficient supported by the second device, information about whether the second device supports FSK, an FSK order supported by the second device, a quantity of subcarriers in at least two OFDM subcarriers supported by the second device, and a band-pass filter parameter of the second device. In this way, the first device may accurately determine the at least two OFDM subcarriers based on the first information.

In a possible design, the FSK signal may be used by the second device to obtain time and/or frequency synchronization, and the at least two OFDM subcarriers may be a first subcarrier set; or the FSK signal may be used by the second device to obtain data, and the at least two OFDM subcarriers may be a second subcarrier set, where the first subcarrier set is different from the second subcarrier set. In this way, appropriate OFDM subcarriers can be selected based on different requirements.

In a possible design, the FSK signal may be used by the second device to obtain time and/or frequency synchronization, and a delay coefficient used when the second device receives the FSK signal may be a first delay coefficient; or the FSK signal may be used by the second device to obtain data, and a delay coefficient used when the second device receives the FSK signal may be a second delay coefficient, where the first delay coefficient is different from the second delay coefficient. In this way, appropriate delay coefficients can be selected based on different requirements.

According to a third aspect, this application further provides a communication apparatus. The communication apparatus may be a first device, and the communication apparatus has functions of implementing the first aspect or possible design examples of the first aspect. The function may be implemented by hardware, or may be implemented by hardware executing corresponding software. The hardware or the software includes one or more modules corresponding to the foregoing function.

In a possible design, a structure of the communication apparatus includes a transceiver unit and a processing unit. These units may perform detailed descriptions in the first aspect or the possible design examples of the first aspect. Details are not described herein again.

In a possible design, a structure of the communication apparatus includes a transceiver and a processor, and optionally, further includes a memory. The transceiver is configured to: receive and send a signal or data, and communicate and interact with another device in a communication system. The processor is configured to support the communication apparatus in performing the corresponding functions in the first aspect or the possible design examples of the first aspect. The memory is coupled to the processor, and the memory stores program instructions and data that are necessary for the communication apparatus.

According to a fourth aspect, this application further provides a communication apparatus. The communication apparatus may be a second device, and the communication apparatus has functions of implementing the second aspect or possible design examples of the second aspect. The function may be implemented by hardware, or may be implemented by hardware executing corresponding software. The hardware or the software includes one or more modules corresponding to the foregoing function.

In a possible design, a structure of the communication apparatus includes a transceiver unit and a processing unit. These units may perform detailed descriptions in the second aspect or the possible design examples of the second aspect. Details are not described herein again.

In a possible design, a structure of the communication apparatus includes a transceiver and a processor, and optionally, further includes a memory. The transceiver is configured to: receive and send a signal or data, and communicate and interact with another device in a communication system. The processor is configured to support the communication apparatus in performing the corresponding functions in the second aspect or the possible design examples of the second aspect. The memory is coupled to the processor, and the memory stores program instructions and data that are necessary for the communication apparatus.

According to a fifth aspect, an embodiment of this application provides a communication system, where the communication system may include the first device in the first aspect, the second device in the second aspect, and the like.

According to a sixth aspect, an embodiment of this application provides a computer-readable storage medium. The computer-readable storage medium stores program instructions, and when the program instructions are run on a computer, the computer is enabled to perform the method in the first aspect and any possible design of the first aspect or in the second aspect and any possible design of the second aspect in embodiments of this application. For example, the computer-readable storage medium may be any available medium accessible to the computer. As an example rather than a limitation, the computer-readable medium may include a non-transitory computer-readable medium, a random access memory (random access memory, RAM), a read-only memory (read-only memory, ROM), an electrically erasable programmable read-only memory (electrically EPROM, EEPROM), a CD-ROM or another optical disk storage, a magnetic disk storage medium or another magnetic storage device, or any other medium that can carry or store desired program code in a form of instruction or data structure and that can be accessed by the computer.

According to a seventh aspect, an embodiment of this application provides a computer program product, including computer program code or instructions. When the computer program code or the instructions are run on a computer, the method in the first aspect or any possible design of the first aspect or in the second aspect or any possible design of the second aspect is performed.

According to an eighth aspect, this application further provides a chip, including a processor. The processor is coupled to a memory, and is configured to: read and execute program instructions stored in the memory, so that the chip implements the method in the first aspect or any possible design of the first aspect or in the second aspect or any possible design of the second aspect.

For each of the third aspect to the eighth aspect and technical effects that can be achieved in the aspect, refer to the foregoing descriptions of the technical effects that can be achieved in the first aspect or the possible solutions in the first aspect or in the second aspect or the possible solutions in the second aspect. Details are not described herein again.

BRIEF DESCRIPTION OF DRAWINGS

FIG. 1 is a diagram of an architecture of a communication system according to this application;
FIG. 2 is a diagram of a low-power receiver according to this application;
FIG. 3 is a flowchart of a communication method according to this application;
FIG. 4 is a diagram of a structure of FSK transmission compatible with OFDM according to this application;
FIG. 5 is a diagram of a structure of a communication apparatus according to this application; and
FIG. 6 is a diagram of a structure of a communication apparatus according to this application.

DESCRIPTION OF EMBODIMENTS

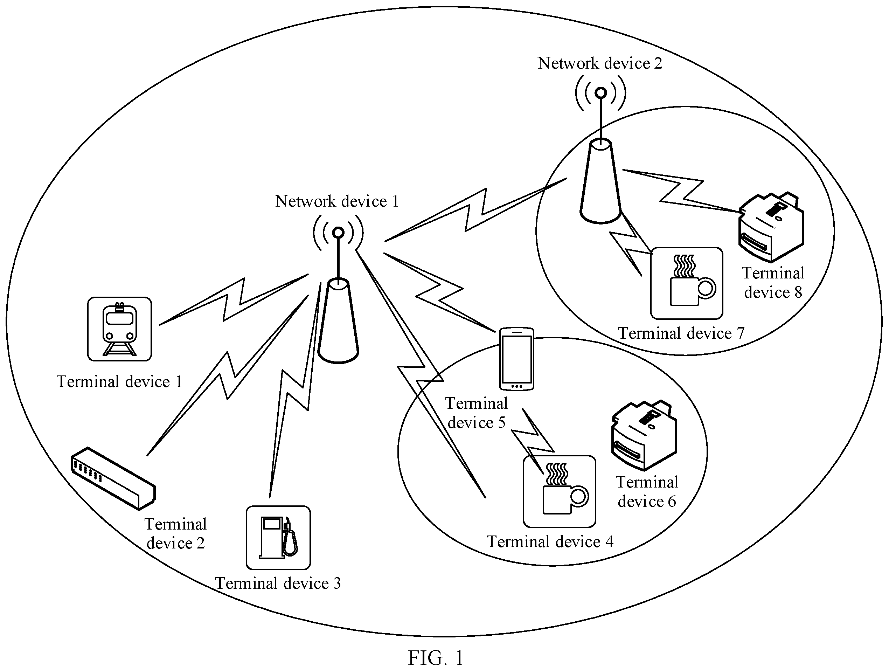

The following further describes in detail this application with reference to accompanying drawings.
Embodiments of this application provides a communication method and apparatus, to improve FSK demodulation performance of a low-power device. The method and the apparatus in this application are based on a same technical concept. Because problem-resolving principles of the method and the apparatus are similar, mutual reference may be made to implementations of the apparatus and the method, and repeated descriptions are not described again.
In the descriptions of this application, words such as "first" and "second" are merely used for distinguishing between descriptions, and cannot be understood as an indication or implication of relative importance, or cannot be understood as an indication of implication of an order.
In the description of this application, "at least one (type)" means one or more (types), and "a plurality of (types)" means two or more (types). In addition, "at least one of the following items" or a similar expression thereof means any combination of these items, including any combination of singular items or plural items. For example, at least one of a, b, or c may indicate a, b, c, a and b, a and c, b and c, or a, b, and c, where a, b, and c may be singular or plural.
In the descriptions of this application, "and/or" describes an association relationship between associated objects, and indicates that three relationships may exist. For example, A and/or B may indicate the following cases: Only A exists, both A and B exist, and only B exists, where A and B may be singular or plural. In addition, "/" indicates "or". For example, a/b indicates a or b.
To describe the technical solutions in embodiments of this application more clearly, the following describes a communication method and apparatus provided in embodiments of this application in detail with reference to the accompanying drawings.
The communication method provided in this application may be applied to various communication systems. For example, embodiments of this application may be applied to an internet of things (internet of things, IoT) network, a backscatter communication system (also referred to as a passive communication system), or a semi-passive communication system. Certainly, embodiments of this application are further applicable to another possible communication system, for example, a long term evolution (long term evolution, LTE) system, an LTE frequency division duplex (frequency division duplex, FDD) system, an LTE time division duplex (time division duplex, TDD) system, a long term evolution advanced (LTE advanced, LTE-A) system, a universal mobile telecommunications system (universal mobile telecommunications system, UMTS), a worldwide interoperability for microwave access (worldwide interoperability for microwave access, WiMAX) communication system, a 5G communication system (like an NR system), a future 6th generation (6th generation, 6G) communication system, or another future communication system or network.
The foregoing communication system applicable to this application is only an example for description, and the communication system applicable to this application is not limited thereto. This is uniformly described herein, and details are not described below again.
For example, FIG. 1 shows a possible architecture of a communication system to which a communication method provided in this application is applicable. A structure of the communication system may include at least one network device and at least one terminal device. For example, as shown in FIG. 1, the communication system may include two network devices: a network device 1 and a network device 2, and eight terminal devices: a terminal device 1 to a terminal device 8.
In the communication system, the network device 1 may send information to one or more terminal devices in the terminal device 1 to the terminal device 6. The network device 1 may send information to one or more terminal devices in the terminal device 7 and the terminal device 8 through the network device 2. In addition, the terminal device 4 to the terminal device 6 may also form a communication subsystem. In the communication subsystem, the terminal device 5 may send information to one or more terminal devices in the terminal device 4 and the terminal device 6. The network device 2, the terminal device 7, and the terminal device 8 may also form a communication subsystem. In the communication subsystem, the network device 2 may send information to one or more terminal devices in the terminal device 7 and the terminal device 8. It should be understood that FIG. 1 is merely a diagram. A type of the communication system, and a quantity, a type, and the like of devices included in the communication system are not specifically limited in this application.

The network device may be a device having a wireless transceiver function or a chip that may be disposed in the network device. The network device includes but is not limited to: an LTE eNodeB (eNodeB), an NR generation NodeB (generation NodeB, gNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission and reception point (transmission and reception point, TRP), a transmission point (transmission point, TP), a reader (Reader), a helper (Helper), or the like. Alternatively, the network device may be a network node, for example, a baseband unit (BBU) or a distributed unit (distributed unit, DU), that constitutes a gNB or a transmission point. When the network device is a base station, the network device may be a macro base station, a micro base station, a small cell, or a pole site. The network device may be a network device that supports receiving of data transmitted through backscatter communication. Alternatively, the network device may be a network device that supports sending of a wake-up signal.

The terminal device may also be referred to user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The terminal device in embodiments of this application may be a mobile phone (mobile phone), a tablet computer (Pad), a computer having a wireless transceiver function, a passive terminal device, a passive IoT terminal device, a semi-passive terminal device, a semi-passive IoT terminal device, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a smart wearable device (smart glasses, a smart watch, a smart headset, or the like), a wireless terminal in a smart home (smart home), a machine type communication terminal device, or the like. The terminal device may be a terminal device that supports backscatter communication, for example, a tag. The terminal device may be a device that supports a wake-up receiver, or may be a device that does not support a wake-up receiver. Alternatively, the terminal device may be a chip, a chip module (or a chip system), or the like that can be disposed in the foregoing device. An application scenario is not limited in embodiments of this application. A terminal device having a wireless transceiver function and a chip that can be disposed in the terminal device are collectively referred to as the terminal device in this application.

The architecture of the communication system and a scenario described in embodiments of this application are intended to describe technical solutions in embodiments of this application more clearly, and do not constitute a limitation on the technical solutions provided in embodiments of this application. A person of ordinary skill in the art may know that, with the evolution of a network architecture and the emergence of new service scenarios, the technical solutions provided in embodiments of this application are also applicable to similar technical problems.

For ease of understanding, the following first explains and describes some terms in embodiments of this application.

(1) Frequency shift keying (frequency shift keying, FSK) modulation

Frequency shift keying modulation is a modulation method in which a frequency change of a carrier is controlled by using a baseband digital signal. A simplest form is binary frequency shift keying (2FSK).

For example, in 2FSK modulation, under control of a digital signal 1 or 0, a carrier signal is sent at one of two frequencies on a carrier. In a state in which the digital signal is 1, a carrier of a frequency f1 is on, and in this case, a carrier is sent on a transmission channel of f1. In a state in which the digital signal is 0, a carrier of a frequency f2 is on, and in this case, a carrier is sent on a transmission channel of f2. Therefore, a receiver may determine whether the digital signal 1 or 0 is sent by determining a transmission channel, in the transmission channel of f1 and the transmission channel of f2, on which a carrier is sent. On transmission channel of each frequency, a transmitted baseband digital signal is similar to an OOK modulation signal.

If 2FSK modulation is applied to an NR or a long term evolution (long term evolution, LTE) system, a modulation symbol with a signal amplitude (or envelope, level, or energy) of the frequency f1 higher than a signal amplitude (or envelope, level, or energy) of the frequency f2 is referred to as a 2FSK modulation symbol {1}; and on the contrary, a modulation symbol with a signal amplitude (or envelope, level, or energy) of the frequency f1 lower than a signal amplitude (or envelope, level, or energy) of the frequency f2 is referred to as a 2FSK modulation symbol {0}. A signal amplitude of a single frequency is defined by being compared with that of another frequency. If the signal amplitude of a single frequency is greater than that of the another frequency, the signal amplitude is high. If the signal amplitude of a single frequency is less than that of the another frequency, the signal amplitude is low.

(2) Conventional receiver and low-power receiver (like an FSK orthogonal self-delay low-power receiver)

The conventional receiver is mainly used for scenarios that have high requirements on a data rate and reliability. In these scenarios, a signal modulation method is generally complex, and the conventional receiver needs to use some circuit modules with high performance and high precision, for example, a frequency mixer with high linearity, a discrete Fourier transform (discrete Fourier transformation, DFT)/fast Fourier transform (fast Fourier transform, FFT) module with high-precision sampling, and a voltage-controlled oscillator that can provide a high-precision local oscillator. To ensure the performance of the circuit modules, power consumption of the conventional receiver cannot be reduced.

Compared with the conventional receiver, the low-power receiver needs to meet a strict power consumption limitation, for example, be less than 1 mW (mW). Through amplitude modulation and/or frequency shift keying modulation, the low-power receiver may detect a signal in an envelope detection manner, to avoid using a circuit module with high power consumption, for example, an FFT module, a high-linear frequency mixer, or a high-precision voltage-controlled oscillator. Therefore, the low-power receiver can be at a low power consumption level.

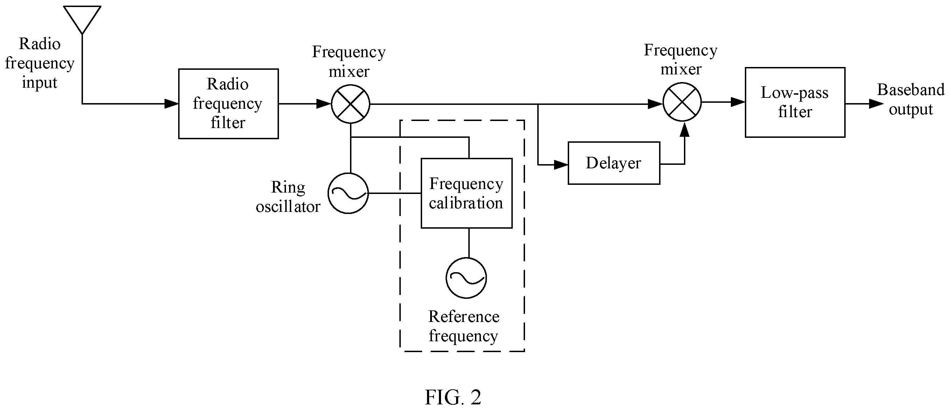

For example, an orthogonal self-delay structure with an uncertain intermediate frequency shown in FIG. 2 may be used in the low-power receiver of frequency shift keying modulation. A diagram of a structure of a receiver in FIG. 2 may be used for demodulation and receiving for 2FSK, and mainly includes parts such as a ring oscillator, a frequency mixer, and a delayer. A radio frequency signal is first converted into a low-frequency intermediate frequency signal through the frequency mixer. Then, the signal is divided into two signals, one signal remains unchanged, and the other signal is subjected to delay and then is mixed with the unchanged signal. When the delay meets a specific orthogonality condition, a baseband signal may be demodulated and output through a low-pass filter.

When the radio frequency signal is converted to the intermediate frequency signal through down-conversion in the structure, a local oscillator signal needs to be provided. To simplify the structure and reduce power consumption, the ring oscillator is usually used to generate the local oscillator signal. However, a frequency generated by the ring oscillator offsets much and changes within a specific range. As a result, a frequency of the intermediate frequency signal obtained through frequency mixing by the ring oscillator is uncertain. Therefore, the receiver structure becomes an uncertain intermediate frequency structure. Because a frequency of the local oscillator signal generated by the ring oscillator is not precise, and changes with time and a temperature, an additional frequency calibration circuit may be needed to calibrate the frequency generated by the ring oscillator, as shown in a dashed box in FIG. 2.

A conventional 2FSK envelope detection receiver requires two narrow-band filters to align modulation frequencies, so as to perform receiving and demodulation. However, one of main features of the uncertain intermediate frequency structure is a dynamic frequency offset of an intermediate frequency signal. Therefore, a conventional envelope detection solution based on a narrow-band filter is not applicable, because a signal frequency may not fall within a passband range of the narrow-band filter due to a large frequency offset. To avoid using two narrow-band band-pass filters, the low-power receiver shown in FIG. 2 performs frequency mixing on the signal subjected to delay and the original signal, and finally the signal is output through the low-pass filter. Therefore, this is referred to as an orthogonal self-delay method, and a basic principle of the method may be as follows:

An expression of the intermediate frequency signal may be: $s(t) = \cos((2\pi(f_0 \pm \Delta f)t + \varphi)$, where $f_0$ is the frequency of the intermediate frequency signal, and $\Delta f$ is an offset between a modulation frequency and the intermediate frequency. A signal $s(t - \tau)$ is obtained after the intermediate frequency signal is subjected to delay $\tau$. Then, frequency mixing is performed on the signal and the intermediate frequency signal, to obtain the following:

$$s(t) \cdot s(t - \tau) = \cos\big((2\pi(f_0 \pm \Delta f)t + \varphi\big) \cdot \cos\big((2\pi(f_0 \pm \Delta f)(t - \tau) + \varphi\big)$$

$$= \frac{1}{2}\cos(4\pi(f_0 \pm \Delta f)\,t - 2\tau(f_0 \pm \Delta f)\tau + 2\varphi) + \cos(2\pi(f_0 \pm \Delta f)\tau)$$

When the delay $\tau$ controlled by the delayer meets an orthogonality condition $2\pi f_0 \tau = \frac{\pi}{2}$, a baseband signal $\sin(\pm 2\pi\Delta f\tau)$ is obtained after the orthogonal self-frequency mixing signal is subjected to low-pass filtering. It can be determined that an original bit stream signal is 0 or 1 based on whether the signal is positive or negative.

It can be learned from the architecture and a principle of the low-power receiver that the low-power receiver does not use the voltage-controlled oscillator that can provide a precise local oscillator, the high-sampling FFT module, or a precise narrow-band filter.

(3) Orthogonal frequency division multiplexing (orthogonal frequency division multiplexing, OFDM)

OFDM modulation is a widely used modulation technology. Generally, a terminal device that supports NR or an internet of things terminal device that supports a standard feature like narrow-band (narrow-band, NB)-IoT may use OFDM as a basic mechanism for signal transmission.

In OFDM modulation, a system bandwidth may be divided into a plurality of parallel subcarriers. The plurality of subcarriers are orthogonal in time domain and overlap in frequency domain. A channel is divided into several orthogonal subchannels, a high-speed data signal is converted into parallel low-speed sub-data streams, and the sub-streams are modulated to the subchannels for transmission. Each OFDM subcarrier can be considered as a flat fading subcarrier, which can improve anti-multipath fading performance.

An OFDM waveform may be implemented through FFT and an inverse process of FFT. In addition, to resist memory of the channel and eliminate inter-symbol interference and inter-symbol interference, in OFDM, a cyclic prefix (cyclic prefix, CP) is usually introduced as a guard interval. In a general NR system, a transmitter maps an information bit stream into a form of a PSK or QAM symbol for modulation.

For example, in an OFDM transmission and receiving process, first, data that needs to be transmitted is modulated and mapped to a complex-valued symbol, where the complex-valued symbol may be written as $ae^{j\varphi}$, a is an amplitude of the symbol, and $\varphi$ is a phase of the symbol. Optionally, modulation may be performed in a quadrature amplitude modulation (quadrature amplitude modulation, QAM) mapping manner, to map information to a QAM symbol (the QAM symbol is a complex-valued symbol). Then, serial-to-parallel conversion is performed, and QAM symbols are mapped to different subcarriers. Inverse fast Fourier transform (inverse fast Fourier transform, IFFT) is performed on the symbols on different subcarriers, to convert the symbols into a time-domain sequence.

In conventional OFDM symbol processing, a tail part of a time-domain sequence is copied to a front end of a signal to become a cyclic prefix. A main function of the cyclic prefix is to counteract multipath transmission delay on a radio channel, and eliminate inter-symbol interference and inter-symbol interference. After the cyclic prefix is added, a transmitter performs digital to analog conversion (digital to analog conversion) on the signal, performs up-conversion, and then performs transmission.

Currently, with further growth of internet of things communication requirements, reducing power consumption of a device becomes an important means of prolonging a battery life, where a wireless communication transceiver is one of components that consume much power in the device. To further meet the internet of things requirements, an internet of things device featuring a smaller battery or even a battery-free design, extremely low power consumption, and extremely low costs is required, or a method for reducing power consumption of a radio transceiver needs to be designed, to overcome the limitation of costs, a size, power consumption, and the like on the internet of things device. For example, for a low-power internet of things device, a method for reducing power consumption of the device is receiving in a non-coherent demodulation method, and a common non-coherent demodulation method includes FSK modulation, and the like. However, currently, when the FSK modulation method is applied to the low-power device, a compatibility problem between FSK and OFDM is not considered, which may result in limited FSK application used by the low-power device. For example, an FSK orthogonal self-delay low-power receiver with an uncertain intermediate frequency may be incompatible with OFDM, which may lead to poor demodulation performance.

Based on this, embodiments of this application provide a communication method, so that FSK signal transmission is compatible with an OFDM transmission mechanism, to reduce interference to a conventional receiver.

A device to which the method in embodiments of this application is applied may have a conventional receiver and a low-power receiver, or may have only a low-power receiver. For example, the communication method in embodiments of this application may be applied to the following devices: a device that has a conventional receiver and a low-power receiver, where currently, only the low-power receiver is in an on state, and the conventional receiver is in an off state; or a device that has only a low-power receiver.

It should be noted that, in the following embodiments, the communication method provided in this application is described in detail by using a first device and a second device as examples. It should be understood that operations performed by the first device may alternatively be implemented by using a processor, a chip, a chip system, a functional module, or the like in the first device; and operations performed by the second device may alternatively be implemented by using a processor, a chip, a chip system, a functional module, or the like in the second device. This is not limited in this application.

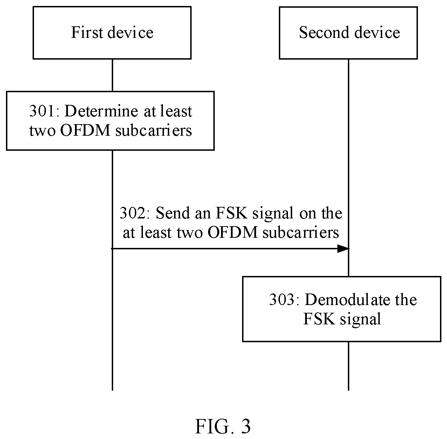

Based on the foregoing description, the communication method provided in embodiments of this application is applicable to the communication system shown in FIG. 1. As shown in FIG. 3, a procedure of the method may include the following steps.

Step 301: A first device determines at least two OFDM subcarriers.

In an optional implementation, the first device may determine the at least two OFDM subcarriers in the following manners.

Manner a1: The first device receives indication information sent by a second device, where the indication information indicates the at least two OFDM subcarriers; and further, the first device may determine the at least two OFDM subcarriers based on the indication information.

Optionally, in Manner a1, the second device may determine the at least two OFDM subcarriers based on a demodulation performance requirement of the second device, and then send the indication information to the first device.

Manner a2: The first device receives first information sent by a second device, where the first information is used to determine the at least two OFDM subcarriers; and further, the first device determines the at least two OFDM subcarriers based on the first information.

In a possible manner, the first information may indicate frequency locations of the at least two OFDM subcarriers. Further, the first device may determine the at least two OFDM subcarriers based on the frequency locations of the at least two OFDM subcarriers indicated by the first information. For example, the at least two OFDM subcarriers are two subcarriers, and the first information may indicate that frequency locations of the two OFDM subcarriers are 45 kHz and 180 kHz.

In another possible manner, the first information may indicate subcarrier indexes of the at least two OFDM subcarriers in a first bandwidth, and further, the first device may determine the at least two OFDM subcarriers based on the subcarrier indexes of the at least two OFDM subcarriers in the first bandwidth. For example, the at least two OFDM subcarriers are two subcarriers, the first bandwidth is one resource block (resource block, RB), and the first information may indicate that indexes of the two OFDM subcarriers in the first bandwidth are 0 and 11.

Certainly, in addition to the foregoing enumerated manners, there are a plurality of other manners in which the first information is used to determine the at least two OFDM subcarriers. This is not limited in this application.

Optionally, the first information may include at least one of the following information: an intermediate frequency of the second device, information about whether the second device supports an orthogonal self-delay receiver structure, information about whether the second device supports a fractional delay filter, a delay coefficient supported by the second device, information about whether the second device supports FSK, an FSK order supported by the second device, a quantity of subcarriers in at least two OFDM subcarriers supported by the second device, and a band-pass filter parameter of the second device. In this way, the first device may accurately determine the at least two OFDM subcarriers based on the first information.

Manner a3: The at least two OFDM subcarriers may be predefined, that is, the first device may determine the at least two OFDM subcarriers that are predefined.

In a possible manner, frequency locations of the at least two OFDM subcarriers may be predefined, and further, the first device may determine the at least two OFDM subcarriers based on the predefined frequency locations of the at least two OFDM subcarriers. For example, the at least two OFDM subcarriers are two subcarriers, and frequency locations of the two OFDM subcarriers may be predefined as 45 kHz and 180 kHz.

In another possible manner, subcarrier indexes of the at least two OFDM subcarriers in a first bandwidth may be predefined, and further, the first device may determine the at least two OFDM subcarriers based on the subcarrier indexes of the at least two OFDM subcarriers in the first bandwidth. For example, the at least two OFDM subcarriers are two subcarriers, the first bandwidth is one resource block (resource block, RB), and it may be predefined that indexes of the two OFDM subcarriers in the first bandwidth are 0 and 11.

Certainly, in addition to the foregoing enumerated manners, the at least two OFDM subcarriers may be predefined in a plurality of other manners. This is not limited in this application.

Manner a4: The at least two OFDM subcarriers may be negotiated by the first device and a second device in advance, that is, the first device may determine the at least two OFDM subcarriers obtained through negotiation.

Manner a5: The first device may determine the at least two OFDM subcarriers by itself.

In Manner a5, the first device may notify a second device of the at least two determined OFDM subcarriers.

When an orthogonal self-delay demodulation method is applied to a low-power receiver, and a 2FSK signal is used as an example, another interference frequency signal needs to be avoided between frequencies corresponding to the 2FSK signal; otherwise, a demodulation error may be caused. Therefore, optionally, no information may be carried in a frequency domain range between every two adjacent OFDM subcarriers in the at least two OFDM subcarriers, to avoid interference. Herein, every two adjacent OFDM subcarriers refer to every two adjacent OFDM subcarriers in a plurality of OFDM subcarriers that are sorted in ascending or descending order of frequencies. For example, the at least two OFDM subcarriers include a subcarrier 1, a subcarrier 2, and a subcarrier 3. If a frequency of the subcarrier 1 is less than a frequency of the subcarrier 2, and the frequency of the subcarrier 2 is less than a frequency of the subcarrier 3, the subcarrier 1 and the subcarrier 2 are adjacent OFDM subcarriers, and the subcarrier 2 and the subcarrier 3 are adjacent OFDM subcarriers.

It should be understood that, that no information is carried in the frequency domain range between every two adjacent OFDM subcarriers in the at least two OFDM subcarriers is an implementation. Optionally, information may alternatively be carried in the frequency domain range between every two adjacent OFDM subcarriers in the two OFDM subcarriers. This is not limited in this application.

For example, an OFDM signal may be carried on a plurality of subcarriers, the at least two OFDM subcarriers are at least two of the plurality of subcarriers. For information about the at least two OFDM subcarriers, refer to an OFDM signal parameter. For example, the OFDM signal parameter may include but is not limited to the following parameters: a subcarrier bandwidth, a spectrum location of a subcarrier, a symbol periodicity, a CP length, or the like.

Step 302: The first device sends an FSK signal to the second device on the at least two OFDM subcarriers. Correspondingly, the second device receives, on the at least two OFDM subcarriers, the FSK signal sent by the first device.

Step 303: The second device demodulates the FSK signal.

That the first device sends an FSK signal to the second device on the at least two OFDM subcarriers may be understood as that the first device performs FSK modulation on data bits, and then maps modulated data bits to the at least two OFDM subcarriers for sending.

Optionally, a frequency of the FSK signal is the same as a frequency of an OFDM subcarrier corresponding to the FSK signal.

For example, the FSK signal may occupy one OFDM subcarrier in the at least two OFDM subcarriers in one time unit. In other words, in one time unit, the first device sends the FSK signal on one OFDM subcarrier in the at least two OFDM subcarriers.

For example, one time unit may include one or more OFDM symbols, or may include one or more slots, or may be in another form. This is not limited in this application.

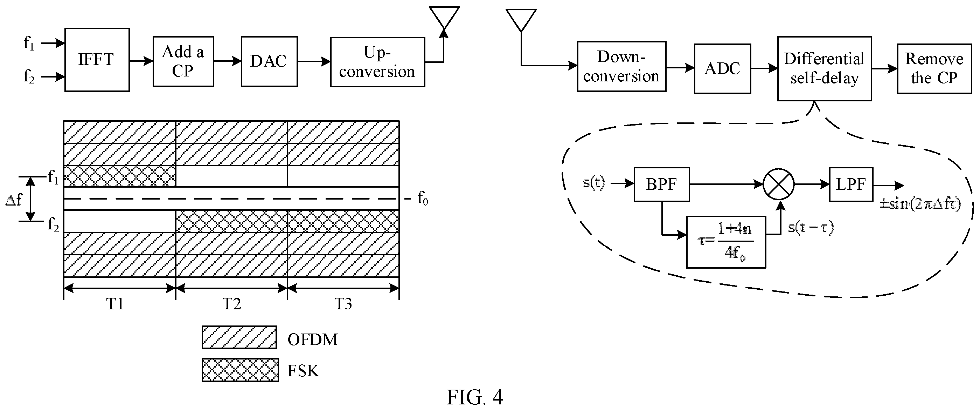

For example, two OFDM subcarriers are used as an example for description. FIG. 4 is a diagram of a structure of FSK transmission compatible with OFDM, and is described with reference to a time-frequency grid. Specifically, as shown in FIG. 4, an OFDM signal corresponds to a plurality of optional OFDM subcarriers. The first device may select two of the OFDM subcarriers to send an FSK signal. For example, frequencies corresponding to the two OFDM subcarriers may be indicated as $\{f_1, f_2\}$, and a frequency spacing between a center frequency of the two OFDM subcarriers and each of the two

$$\Delta f = \frac{|f_1 - f_2|}{2}$$

OFDM subcarriers may be indicated as                   . Optionally, $\Delta f$ may alternatively be described as a half of a frequency spacing between the two OFDM subcarriers. In time domain, a 1st FSK symbol (an FSK signal sent in a time unit T1 in the figure) indicates a first value (for example, logic "0"), and a 2nd FSK symbol and a 3rd FSK symbol (an FSK signal sent in a time unit T2 and an FSK signal sent in a time unit T3 in the figure) indicate a second value (for example, logic "1"). In a current symbol sending period, a subcarrier that is in $\{f_1, f_2\}$ and that is not used for FSK transmission does not carry information, that is, the FSK signal occupies one of the OFDM subcarriers in one time unit.

The second device may include a low-power receiver. For example, for a structure of the second device, refer to FIG. 2. In this application, a delay coefficient n (n may be an integer greater than or equal to 0) may be introduced to control

$$2\pi f_0 \tau = \frac{\pi}{2}$$

a delay degree of a delayer, so that this is not limited to the delay that meets                   and that is described in (2). The delay coefficient may be understood as a delay coefficient of a delayer in the low-power receiver of the second device. The delay coefficient is introduced, so that an output eye diagram of a baseband signal can be increased, to improve FSK demodulation performance. For example, the receiver shown in FIG. 4 is used as an example. To meet an orthogonality

$$\tau = \frac{1}{4f_0}$$

condition of a delay signal and an original signal, in the low-power receiver, a delay is usually controlled to meet                   ,

$$\pm \sin\left(\frac{\pi}{2} \cdot \frac{\Delta f}{f_0}\right)$$

and a baseband signal is output as                   . Generally, an intermediate frequency $f_0$ of the receiver is several orders of magnitude higher than the frequency spacing $\Delta f$ of the FSK signal. As a result, an amplitude (eye diagram) of the baseband signal is small and transmission reliability is low. After the delay coefficient n is introduced, the delayer in the

$$2\pi f_0 \tau = \frac{\pi}{2} + 2n\pi$$

receiver can meet                   , and a self-delay signal and an original signal are still orthogonal. In this case, an

$$\pm \sin\left(\frac{\pi}{2} \cdot \frac{\Delta f \cdot (1+4n)}{f_0}\right)$$

output of the baseband signal may be                   . It can be learned from the result that the delay coefficient n can increase the eye diagram of the baseband signal, and improve FSK signal demodulation performance.

The second device may demodulate the FSK signal in a differential self-delay manner, and perform a delay operation on an intermediate frequency signal obtained through digital sampling. The delayer may be a discrete digital delayer. In this case, a system parameter needs to meet a constraint that a discrete delay point is an integer, which may be

$$\frac{f_s(1+4n)}{4f_0} \in N_+$$

indicated as                   , where $f_s$ is a sampling rate of the second device; or $f_s$ is an approximation of a delay effect obtained when the second device uses a fractional delay filter. In this case, there is no integer constraint, and $N_+$ is a positive integer. An implementation of a signal delay is not specifically limited in this embodiment. In other words, the discrete digital delayer is merely an example of the delayer. This is not limited in this application.

Optionally, the delay coefficient n may be predefined, or may be negotiated by the first device and the second device, or may be directly indicated by the first device to the second device, or may be determined by the second device, or may be determined in another manner. This is not limited in this application.

When demodulating the FSK signal, the second device may perform data demodulation by performing frequency mixing on the original signal and the FSK signal subjected to self-delay. The demodulation performance may be reflected in a size of an eye diagram of the baseband signal, and the size of the eye diagram is related to parameters such as a selected OFDM subcarrier, a delay coefficient, and an intermediate frequency. Therefore, the FSK transmission parameters may be adjusted to implement better link performance.

Based on this, in an optional implementation, the at least two OFDM subcarriers are two OFDM subcarriers, and frequencies of the two OFDM subcarriers may meet Formula 1:

$$\frac{\Delta f \cdot (1+4n)}{f_0} = 1 \qquad\qquad \text{Formula 1:}$$

Herein, $\Delta f$ is a frequency spacing between a center frequency of the two OFDM subcarriers and each of the frequencies of the two OFDM subcarriers, or $\Delta f$ may be described as a half of a frequency spacing between the two OFDM subcarriers, that is, $\Delta f = \frac{|f_1 - f_2|}{2}$, the frequencies corresponding to the two OFDM subcarriers may be indicated as $\{f_1, f_2\}$, $f_0$ is an intermediate frequency, and n is a delay coefficient.

The example of the two OFDM subcarriers is still used. When performing FSK transmission, the first device may determine an OFDM subcarrier pair in a specific frequency domain resource. In addition, the delay coefficient n needs to be a positive integer. Therefore, Formula 1 may not be strictly equal to 1. The second device may select n by itself based on the spacing between the two subcarriers of the FSK signal and the local intermediate frequency, so that demodulation performance is good. For example, an OFDM subcarrier spacing is 15 kHz. It is assumed that the first device selects FSK frequencies in a frequency domain resource of 12 subcarriers, that is, selects two OFDM subcarriers. For a receiver device with an intermediate frequency $f_0$ = 400 kHz, a 4th subcarrier and a 10th subcarrier may be selected for FSK signal transmission, that is, a frequency spacing $\Delta f$ = 3 × 15 kHz = 45 kHz. The second device may determine the delay coefficient n = 2, and in this case, an output of the baseband signal of the receiver of the second device may meet Formula 2:

$$\sin\left(\frac{\pi}{2} \cdot \frac{\pm \Delta f \cdot (1+4n)}{f_0}\right) = \sin\left(\frac{\pi}{2} \cdot \frac{\pm(3 \times 15\ \text{kHz}) \cdot (1+4\times2)}{400\ \text{kHz}}\right) \approx \pm 1 \qquad\qquad \text{Formula 2}$$

Optionally, Formula 1 may be a relationship that an OFDM subcarrier and a delay coefficient meet when there is no frequency offset on the second device.

In another optional implementation, there is a frequency offset between the first device and the second device. For example, a receiver has an uncertain intermediate frequency structure, and cannot provide a precise local oscillator signal. As a result, a received signal has a large frequency offset relative to a sent signal. Before data communication between the first device and the second device is implemented, frequency-offset estimation and correction are not implemented, and the frequency offset may affect data demodulation performance. Specifically, a size of an eye diagram of a baseband signal periodically changes with the frequency offset. For the foregoing scenario in which a frequency offset exists, appropriate OFDM subcarriers and appropriate delay coefficients may be selected based on different requirements.

In an example, the FSK signal may be used by the second device to obtain time and/or frequency synchronization, and the at least two OFDM subcarriers may be a first subcarrier set; or the FSK signal may be used by the second device to obtain data, and the at least two OFDM subcarriers may be a second subcarrier set, where the first subcarrier set may be different from the second subcarrier set.

In another example, the FSK signal may be used by the second device to obtain time and/or frequency synchronization, and a delay coefficient used when the second device receives the FSK signal may be a first delay coefficient; or the FSK signal may be used by the second device to obtain data, and a delay coefficient used when the second device receives the FSK signal may be a second delay coefficient, where the first delay coefficient is different from the second delay coefficient.

Optionally, the first delay coefficient may be less than the second delay coefficient, or the first delay coefficient may be greater than the second delay coefficient. This is not limited in this application.

For example, in a synchronization phase, a subcarrier pair $\{f_1^s, f_2^s\}$ and a small delay coefficient n may be selected for FSK modulation and demodulation, to send a synchronization signal, so that anti-frequency-offset performance is good; and in a data transmission phase, another subcarrier pair $\{f_1^t, f_2^t\}$ and a large delay coefficient n may be selected for FSK modulation and demodulation, to send a data signal, so that anti-noise performance is good.

According to the foregoing communication method, FSK transmission of a low-power receiver can be compatible with OFDM, so that FSK demodulation performance can be improved.

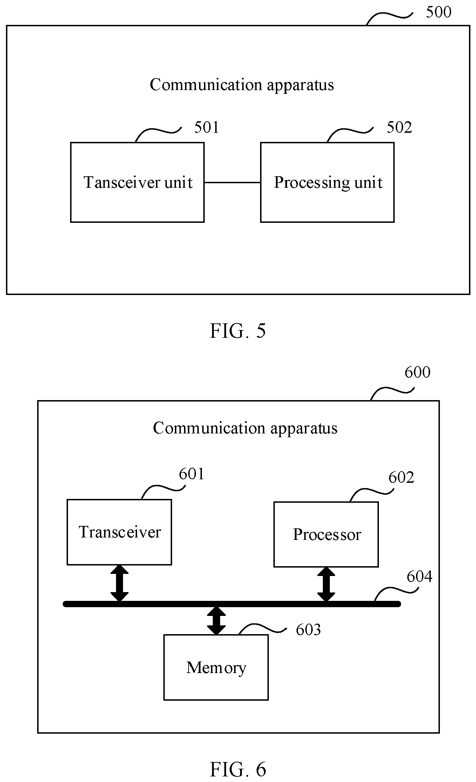

Based on the foregoing embodiments, an embodiment of this application further provides a communication apparatus. As shown in FIG. 5, a communication apparatus 500 may include a transceiver unit 501 and a processing unit 502. The transceiver unit 501 is configured to be used by the communication apparatus 500 to receive a signal (a message or data) or send information (a message or data). The processing unit 502 is configured to control and manage an action of the communication apparatus 500. The processing unit 502 may further control steps performed by the transceiver unit 501.

For example, the communication apparatus 500 may be specifically the first device in the foregoing embodiments, a processor, a chip, or a chip system, or a functional module in the first device; or the communication apparatus 500 may be specifically the second device in the foregoing embodiments, a processor, a chip, or a chip system, or a functional module in the second device.

In an embodiment, when the communication apparatus 500 is used to implement functions of the first device in the embodiment shown in FIG. 3, the communication apparatus 500 may include: the processing unit 502, configured to determine at least two orthogonal frequency division multiplexing OFDM subcarriers; and the transceiver unit 501, configured to send a frequency shift keying FSK signal to the second device on the at least two OFDM subcarriers.

For example, no information is carried in a frequency domain range between every two adjacent OFDM subcarriers in the at least two OFDM subcarriers.

In an optional implementation, a frequency of the FSK signal is the same as a frequency of an OFDM subcarrier corresponding to the FSK signal.

Optionally, the FSK signal occupies one OFDM subcarrier in the at least two OFDM subcarriers in one time unit.

In a possible manner, the at least two OFDM subcarriers are two OFDM subcarriers, and frequencies of the two OFDM subcarriers meet the following formula:

$$\frac{\Delta f \cdot (1 + 4n)}{f_0} = 1$$

where $\Delta f$ is a frequency spacing between a center frequency of the two OFDM subcarriers and each of the frequencies of the two OFDM subcarriers, $f_0$ is an intermediate frequency, and n is a delay coefficient.

In an example, when determining the at least two OFDM subcarriers, the processing unit 502 may be configured to:

control the transceiver unit 501 to receive indication information sent by the second device, where the indication information indicates the at least two OFDM subcarriers; or
control the transceiver unit 501 to receive first information sent by the second device, where the first information is used to determine the at least two OFDM subcarriers; and determine the at least two OFDM subcarriers based on the first information; or
determine the at least two OFDM subcarriers that are predefined.

Optionally, the first information may include at least one of the following: an intermediate frequency of the second device, information about whether the second device supports an orthogonal self-delay receiver structure, information about whether the second device supports a fractional delay filter, a delay coefficient supported by the second device, information about whether the second device supports FSK, an FSK order supported by the second device, a quantity of subcarriers in at least two OFDM subcarriers supported by the second device, and a band-pass filter parameter of the second device.

In a possible manner, the FSK signal is used by the second device to obtain time and/or frequency synchronization, and the at least two OFDM subcarriers is a first subcarrier set; or the FSK signal is used by the second device to obtain data, and the at least two OFDM subcarriers is a second subcarrier set, where the first subcarrier set is different from the second subcarrier set.

In a possible manner, the FSK signal is used by the second device to obtain time and/or frequency synchronization, and a delay coefficient used by the second device is a first delay coefficient; or the FSK signal is used by the second device to obtain data, and a delay coefficient used by the second device is a second delay coefficient, where the first delay coefficient is different from the second delay coefficient.

In an embodiment, when the communication apparatus 500 is used to implement functions of the second device in the embodiment shown in FIG. 2, the communication apparatus 500 may include: the transceiver unit 501, configured to receive, on at least two orthogonal frequency division multiplexing OFDM subcarriers, a frequency shift keying FSK signal sent by the first device; and the processing unit 502, configured to demodulate the FSK signal.

For example, no information is carried in a frequency domain range between every two adjacent OFDM subcarriers in the at least two OFDM subcarriers.

Optionally, a frequency of the FSK signal is the same as a frequency of an OFDM subcarrier corresponding to the FSK signal.

In an optional implementation, the FSK signal occupies one OFDM subcarrier in the at least two OFDM subcarriers in one time unit.

In a possible manner, the at least two OFDM subcarriers are two OFDM subcarriers, and frequencies of the two OFDM subcarriers meet the following formula:

$$\frac{\Delta f \cdot (1 + 4n)}{f_0} = 1$$

where $\Delta f$ is a frequency spacing between a center frequency of the two OFDM subcarriers and each of the frequencies of the two OFDM subcarriers, $f_0$ is an intermediate frequency, and n is a delay coefficient.

In an example, the transceiver unit 501 may be further configured to: send indication information to the first device, where the indication information indicates the at least two OFDM subcarriers; or send first information to the first device, where the first information is used to determine the at least two OFDM subcarriers; or

the processing unit 502 is further configured to determine the at least two OFDM subcarriers that are predefined.

Optionally, the first information may include at least one of the following: an intermediate frequency of the second device, information about whether the second device supports an orthogonal self-delay receiver structure, information about whether the second device supports a fractional delay filter, a delay coefficient supported by the second device, information about whether the second device supports FSK, an FSK order supported by the second device, a quantity of subcarriers in at least two OFDM subcarriers supported by the second device, and a band-pass filter parameter of the second device.

In a possible manner, the FSK signal is used by the second device to obtain time and/or frequency synchronization, and the at least two OFDM subcarriers are a first subcarrier set; or the FSK signal is used by the second device to obtain data, and the at least two OFDM subcarriers are a second subcarrier set, where the first subcarrier set is different from the second subcarrier set.

In another possible manner, the FSK signal is used by the second device to obtain time and/or frequency synchronization, and a delay coefficient used when the transceiver unit 501 receives the FSK signal is a first delay coefficient; or the FSK signal is used by the second device to obtain data, and a delay coefficient used when the transceiver unit 501 receives the FSK signal is a second delay coefficient, where the first delay coefficient is different from the second delay coefficient.

It should be noted that, in this embodiment of this application, division into the units is an example, and is merely a logical function division. During actual implementation, another division manner may be used. Functional units in embodiments of this application may be integrated into one processing unit, each of the units may exist alone physically, or two or more units may be integrated into one unit. The integrated unit may be implemented in a form of hardware, or may be implemented in a form of software functional unit.

When the integrated unit is implemented in the form of software functional unit and sold or used as an independent product, the integrated unit may be stored in a computer-readable storage medium. Based on such an understanding, the technical solutions of this application essentially, or the part contributing to the current technology, or all or some of the technical solutions may be implemented in the form of software product. The computer software product is stored in a storage medium and includes several instructions for instructing a computer device (which may be a personal computer, a server, a network device, or the like) or a processor (processor) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

Based on the foregoing embodiments, an embodiment of this application further provides a communication apparatus. As shown in FIG. 6, a communication apparatus 600 may include a transceiver 601 and a processor 602. Optionally, the communication apparatus 600 may further include a memory 603. The memory 603 may be disposed inside the communication apparatus 600, or may be disposed outside the communication apparatus 600. The processor 602 may control the transceiver 601 to receive and send information, a message, data, or the like.

Specifically, the processor 602 may be a central processing unit (central processing unit, CPU), a network processor (network processor, NP), or a combination of a CPU and an NP. The processor 602 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof.

The transceiver 601, the processor 602, and the memory 603 are connected to each other. Optionally, the transceiver 601, the processor 602, and the memory 603 are connected to each other through a bus 604. The bus 604 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of indication, the bus is indicated by only one bold line in FIG. 6. However, it does not indicate that there is only one bus or only one type of bus.

In an optional implementation, the memory 603 is configured to store a program and the like. Specifically, the program may include program code, and the program code includes computer operation instructions. The memory 603 may include a RAM, and may further include a non-volatile memory (non-volatile memory), for example, one or more disk memories. The processor 602 executes the application program stored in the memory 603 to implement the foregoing functions, so as to implement functions of the communication apparatus 600.

For example, the communication apparatus 600 may be the first device in the foregoing embodiments, or may be the second device in the foregoing embodiments.

In an embodiment, when the communication apparatus 600 implements a function of the first device in the embodiment shown in FIG. 3, the transceiver 601 may implement a receiving/sending operation performed by the first device in the embodiment shown in FIG. 3, and the processor 602 may implement an operation other than the receiving/sending operation performed by the first device in the embodiment shown in FIG. 3. Specifically, for related specific descriptions, refer to related descriptions in the embodiment shown in FIG. 3. Details are not described herein again.

In an embodiment, when the communication apparatus 600 implements a function of the second device in the embodiment shown in FIG. 3, the transceiver 601 may implement a receiving/sending operation performed by the second device in the embodiment shown in FIG. 3, and the processor 602 may implement an operation other than the receiving/sending operation performed by the second device in the embodiment shown in FIG. 3. Specifically, for related specific descriptions, refer to related descriptions in the embodiment shown in FIG. 3. Details are not described herein again.

Based on the foregoing embodiments, an embodiment of this application provides a communication system. The communication system may include the first device, the second device, and the like in the foregoing embodiments.

An embodiment of this application further provides a computer-readable storage medium. The computer-readable storage medium is configured to store a computer program. When the computer program is executed by a computer, the computer may implement the communication method provided in the method embodiment shown in FIG. 3.

An embodiment of this application further provides a computer program product. The computer program product is configured to store a computer program. When the computer program is executed by a computer, the computer may implement the communication method provided in the method embodiment shown in FIG. 3.

An embodiment of this application further provides a chip, including a processor. The processor is coupled to a memory, and is configured to invoke a program in the memory, so that the chip implements the communication method provided in the method embodiment shown in FIG. 3.

An embodiment of this application further provides a chip. The chip is coupled to a memory, and the chip is configured to implement the communication method provided in the method embodiment shown in FIG. 3.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clearly that, a person skilled in the art can make various modifications and variations to this application without departing from the scope of this application. This application is intended to cover these modifications and variations of this application provided that they fall within the scope of protection defined by the following claims of this application and their equivalent technologies.

**Claims**

1.  A communication method, comprising:

    determining, by a first device, at least two orthogonal frequency division multiplexing OFDM subcarriers; and
    sending, by the first device, a frequency shift keying FSK signal to a second device on the at least two OFDM subcarriers.

2.  The method according to claim 1, wherein no information is carried in a frequency domain range between every two adjacent OFDM subcarriers in the at least two OFDM subcarriers.

3.  The method according to claim 1 or 2, wherein the FSK signal occupies one OFDM subcarrier in the at least two OFDM subcarriers in one time unit.

4.  The method according to any one of claims 1 to 3, wherein the at least two OFDM subcarriers are two OFDM subcarriers, and frequencies of the two OFDM subcarriers meet the following formula:

$$\frac{\Delta f \cdot (1 + 4n)}{f_0} = 1, \text{wherein}$$

    $\Delta f$ is a frequency spacing between a center frequency of the two OFDM subcarriers and each of the frequencies of the two OFDM subcarriers, $f_0$ is an intermediate frequency, and n is a delay coefficient.

5.  The method according to any one of claims 1 to 4, wherein the determining, by a first device, at least two OFDM subcarriers comprises:

    receiving, by the first device, first information sent by the second device, wherein the first information is used to determine the at least two OFDM subcarriers; and determining, by the first device, the at least two OFDM subcarriers based on the first information; or
    determining, by the first device, the at least two OFDM subcarriers that are predefined.

6.  The method according to claim 5, wherein the first information comprises at least one of the following: an intermediate frequency of the second device, information about whether the second device supports an orthogonal self-delay receiver structure, information about whether the second device supports a fractional delay filter, a delay coefficient supported by the second device, information about whether the second device supports FSK, an FSK order supported by the second device, a quantity of subcarriers in at least two OFDM subcarriers supported by the second device, and a band-pass filter parameter of the second device.

7.  The method according to any one of claims 1 to 6, wherein the FSK signal is used by the second device to obtain time and/or frequency synchronization, and the at least two OFDM subcarriers are a first subcarrier set; or

    the FSK signal is used by the second device to obtain data, and the at least two OFDM subcarriers are a second subcarrier set, wherein
    the first subcarrier set is different from the second subcarrier set.

8.  The method according to any one of claims 1 to 7, wherein the FSK signal is used by the second device to obtain time and/or frequency synchronization, and a delay coefficient used by the second device is a first delay coefficient; or

the FSK signal is used by the second device to obtain data, and a delay coefficient used by the second device is a second delay coefficient, wherein
the first delay coefficient is different from the second delay coefficient.

9. A communication method, comprising:

receiving, by a second device on at least two orthogonal frequency division multiplexing OFDM subcarriers, a frequency shift keying FSK signal sent by a first device; and
demodulating, by the second device, the FSK signal.

10. The method according to claim 9, wherein no information is carried in a frequency domain range between every two adjacent OFDM subcarriers in the at least two OFDM subcarriers.

11. The method according to claim 9 or 10, wherein the FSK signal occupies one OFDM subcarrier in the at least two OFDM subcarriers in one time unit.

12. The method according to any one of claims 9 to 11, wherein the at least two OFDM subcarriers are two OFDM subcarriers, and frequencies of the two OFDM subcarriers meet the following formula:

$$\frac{\Delta f \cdot (1 + 4n)}{f_0} = 1, \text{wherein}$$

$\Delta f$ is a frequency spacing between a center frequency of the two OFDM subcarriers and each of the frequencies of the two OFDM subcarriers, $f_0$ is an intermediate frequency, and n is a delay coefficient.

13. The method according to any one of claims 9 to 12, wherein the method further comprises:

sending, by the second device, first information to the first device, wherein the first information is used to determine the at least two OFDM subcarriers; or
determining, by the second device, the at least two OFDM subcarriers that are predefined.

14. The method according to claim 13, wherein the first information comprises at least one of the following: an intermediate frequency of the second device, information about whether the second device supports an orthogonal self-delay receiver structure, information about whether the second device supports a fractional delay filter, a delay coefficient supported by the second device, information about whether the second device supports FSK, an FSK order supported by the second device, a quantity of subcarriers in at least two OFDM subcarriers supported by the second device, and a band-pass filter parameter of the second device.

15. The method according to any one of claims 9 to 14, wherein the FSK signal is used by the second device to obtain time and/or frequency synchronization, and the at least two OFDM subcarriers are a first subcarrier set; or

the FSK signal is used by the second device to obtain data, and the at least two OFDM subcarriers are a second subcarrier set, wherein
the first subcarrier set is different from the second subcarrier set.

16. The method according to any one of claims 9 to 15, wherein the FSK signal is used by the second device to obtain time and/or frequency synchronization, and a delay coefficient used when the second device receives the FSK signal is a first delay coefficient; or

the FSK signal is used by the second device to obtain data, and a delay coefficient used when the second device receives the FSK signal is a second delay coefficient, wherein
the first delay coefficient is different from the second delay coefficient.

17. A communication apparatus, comprising a module or a unit configured to perform the method according to any one of claims 1 to 8.

18. A communication apparatus, comprising a module or a unit configured to perform the method according to any one of claims 9 to 16.

19. A communication apparatus, comprising a memory, a processor, and a transceiver, wherein

the memory is configured to store computer instructions;
the transceiver is configured to: receive and send information; and
the processor is coupled to the memory, and is configured to invoke the computer instructions in the memory, to perform the method according to any one of claims 1 to 8 by using the transceiver.

20. A communication apparatus, comprising a memory, a processor, and a transceiver, wherein

the memory is configured to store computer instructions;
the transceiver is configured to: receive and send information; and
the processor is coupled to the memory, and is configured to invoke the computer instructions in the memory, to perform the method according to any one of claims 9 to 16 by using the transceiver.

21. A computer-readable storage medium, wherein the computer-readable storage medium stores computer-executable instructions, and when the computer-executable instructions are invoked by a computer, the method according to any one of claims 1 to 8 is performed, or the method according to any one of claims 9 to 16 is performed.

22. A computer program product, comprising instructions, wherein when the instructions are run on a computer, the method according to any one of claims 1 to 8 or the method according to any one of claims 9 to 16 is performed.

23. A chip, wherein the chip is coupled to a memory, and is configured to: read and execute program instructions stored in the memory, to implement the method according to any one of claims 1 to 8, or implement the method according to any one of claims 9 to 16.

FIG. 1

FIG. 2

First device

Second device

301: Determine at least
two OFDM subcarriers

302: Send an FSK signal on the
at least two OFDM subcarriers

303: Demodulate the
FSK signal

FIG. 3

FIG. 4

500

Communication apparatus

501

Tansceiver unit

502

Processing unit

FIG. 5

600

Communication apparatus

601

Transceiver

602

Processor

604

603

Memory

FIG. 6

## INTERNATIONAL SEARCH REPORT

<table>
<tr><td colspan="2">International application No.<br><br>**PCT/CN2023/124100**</td></tr>
</table>

| A. | CLASSIFICATION OF SUBJECT MATTER |
|---|---|

H04L 27/26(2006.01)i

According to International Patent Classification (IPC) or to both national classification and IPC

| B. | FIELDS SEARCHED |
|---|---|

Minimum documentation searched (classification system followed by classification symbols)

IPC: H04W H04Q H04L

Documentation searched other than minimum documentation to the extent that such documents are included in the fields searched

Electronic data base consulted during the international search (name of data base and, where practicable, search terms used)

CNTXT, ENTXTC, ENTXT, DWPI, 3GPP: 低功耗, FSK, OFDM, 子载波, 调制, 解调, Low power, BLE, frequency shift keying, subcarrier, modulat+, demodulat+

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 2020162306 A1 (TELEFONAKTIEBOLAGET LM ERICSSON (PUBL)) 21 May 2020 (2020-05-21)<br>description, paragraphs 68-98, and figures 1-4 | 1-23 |
| X | CN 113746768 A (XIAMEN ZIFISENSE INFORMATION TECHNOLOGY CO., LTD.) 03 December 2021 (2021-12-03)<br>description, paragraphs 39-67 | 1-23 |
| A | CN 108141421 A (THE REGENTS OF THE UNIVERSITY OF MICHIGAN) 08 June 2018 (2018-06-08)<br>entire document | 1-23 |
| A | US 2020037251 A1 (HUAWEI TECHNOLOGIES CO., LTD.) 30 January 2020 (2020-01-30)<br>entire document | 1-23 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 November 2023** | **22 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/124100**

| Patent document cited in search report | | | Publication date (day/month/year) | Patent family member(s) | | | Publication date (day/month/year) |
|---|---|---|---|---|---|---|---|
| US | 2020162306 | A1 | 21 May 2020 | WO | 2018196954 | A1 | 01 November 2018 |
| | | | | EP | 3616378 | A1 | 04 March 2020 |
| | | | | JP | 2020518176 | A | 18 June 2020 |
| | | | | CN | 110546930 | A | 06 December 2019 |
| CN | 113746768 | A | 03 December 2021 | WO | 2023040213 | A1 | 23 March 2023 |
| CN | 108141421 | A | 08 June 2018 | KR | 20180041155 | A | 23 April 2018 |
| | | | | WO | 2017030561 | A1 | 23 February 2017 |
| | | | | JP | 2018530206 | A | 11 October 2018 |
| | | | | EP | 3335392 | A1 | 20 June 2018 |
| US | 2020037251 | A1 | 30 January 2020 | WO | 2018126612 | A1 | 12 July 2018 |
| | | | | CN | 110169144 | A | 23 August 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211338391